# EUROPEAN PATENT SPECIFICATION

(11) **EP 2 881 861 B1**
(45) Date of publication and mention of the grant of the patent: **31.05.2017**
(21) Application number: 12882181.6
(22) Date of filing: 02.08.2012
(51) Int. Cl.: G06F 9/50, G06F 13/00, G06F 15/00

(54) **LOAD DISTRIBUTION DEVICE, INFORMATION PROCESSING SYSTEM, METHOD, AND PROGRAM**
LASTVERTEILUNGSVORRICHTUNG, INFORMATIONSVERARBEITUNGSSYSTEM, VERFAHREN UND PROGRAMM
DISPOSITIF DE RÉPARTITION DE CHARGE, SYSTÈME DE TRAITEMENT D'INFORMATIONS, PROCÉDÉ ET PROGRAMME

(43) Date of publication of application: 10.06.2015
(73) Proprietor: Murakumo Corporation, Tokyo 153-0061 (JP)
(72) Inventor: WATANABE, Takahiro, Tokyo 153-0061 (JP)
(74) Representative: Wallin, Nicholas James
(86) International application number: PCT/JP2012/069698
(87) International publication number: WO 2014/020742

(56) References cited:
- JP-A- 2010 193 124
- JP-A- 2012 048 424
- JP-A- 2012 103 879
- US-A1- 2003 014 526

## Description

### [Technical field]

A technique according to the present invention relates to information processing using a load balancing device.

### [Background art]

A router has conventionally been proposed that searches a policy routing table with a search key, such as a transmission source IP address, a protocol type, and an address port number, and searches a hash table in accordance with a result of the search to determine a routing destination (see Japanese Patent Application Laid-open No. 2003-281109).

### [Prior Art Documents]

### [Patent Application Publication]

[Document 1] Japanese Patent Application Laid-open No. 2003-281109 D1: US 2003/014526 A1 (PULLARA SAM [US] ET AL) 16 January 2003 (2003-01-16) discloses a method for load balancing when a primary server storing session information fails.

### [Summary of the invention]

### [Problem to be solved by the invention]

In one conventionally employed technique for providing services to clients in use of a plurality of servers, a load balancing apparatus, such as what is known as a load balancer, allocates communication to any of the plurality of servers to distribute a processing load among the plurality of servers. When the load balancing apparatus allocates the communication to any of the servers, in some cases, communication identification information (such as session information) is replicated among the plurality of servers, so that the server allocated with the communication can acquire the communication identification information corresponding to a communication partner client. In one method for replicating the communication identification information, the communication identification information is replicated to some of the servers to reduce the load related to a traffic, the number of times the replication is performed, and the like.

Unfortunately, in a method in which the communication identification information is replicated among some of the servers, a load balancing apparatus might allocate communication to a server which does not have the communication identification information.

The present invention is made in view of the problem described above, and an object of the present invention is to improve accuracy of communication allocation in a system in which communication is allocated to any of a plurality of servers.

### [Means for solving the problem]

A load balancing apparatus described herein is a load balancing apparatus that determines, in an information processing system that determines a replication target server as a replication target of communication identification information for identifying communication between a client and a server from among a plurality of servers by using a predetermined algorithm having reproducibility with respect to an input, an allocation target of the communication. The load balancing apparatus includes: an allocation target determination unit that determines an allocation target server to which the communication is allocated from among the plurality of servers, by using the predetermined algorithm; and a communication allocation unit that allocates the communication to the allocation target server determined by the allocation target determination unit.

The information processing system may determine the replication target server for the communication identification information by processing at least part of the communication identification information on the basis of the predetermined algorithm. The allocation target determination unit may determine the allocation target server to which the communication corresponding to the communication identification information is allocated, by processing at least part of the communication identification information, on the basis of the predetermined algorithm.

The load balancing apparatus may further include: an identifier generation unit that generates an identifier for identifying the communication; and a notification unit that notifies the allocation target server determined by the allocation target determination unit of the identifier generated by the identifier generation unit so that the identifier is included in the communication identification information. The allocation target determination unit may determine the allocation target server, by processing the identifier based on the predetermined algorithm.

The predetermined algorithm may be an algorithm for selecting one or a plurality of servers from among the plurality of servers in an order of reproducibility with respect to an input. The information processing system may determine as the replication target server, a predetermined number of servers from a server ranked top in the order from among the servers selected by using the predetermined algorithm. The allocation target determination unit determines the allocation target server in accordance with the order.

The present invention may also be regarded as an information processing system. Specifically, an aspect of the present invention is an information processing system including a plurality of ervers and load balancing apparatus. Each of the plurality of servers includes: a replication target determination unit that determines an allocation target server as a replication target for communication identifier information in order to identify communication between a client and a server from among the plurality of servers, by using the predetermined algorithm having reproducibility with respect to an input; and a replication unit that replicates the communication identification information to the replication target server determined by the replication target determination unit. The load balancing apparatus comprises an allocation target determination unit that determines an allocation target server to which the communication is allocated from among the plurality of servers, by using the predetermined algorithm; and a communication allocation unit that allocates the communication to the allocation target server determined by the allocation target determination unit.

The load balancing apparatus determines the allocation target server to which the communication corresponding to the communication identification information is allocated, by processing at least part of the communication identification information on the basis of the predetermined algorithm. The replication target determination unit determines a replication target server for the communication identification information by processing at least part of the communication identification information on the basis of the predetermined algorithm.

The predetermined algorithm may be an algorithm for selecting one or a plurality of servers from among the plurality of servers in an order of reproducibility with respect to an input. The replication target determination unit may determine as the replication target server, a predetermined number of servers from a server ranked top in the order from among the servers selected by using the predetermined algorithm.

Another algorithm may be employed as the predetermined algorithm. For example, a method of mapping servers on a tree and selecting a server with a priority determined in accordance with the depth may be employed as the predetermined algorithm.

The present invention may be regarded as an information processing apparatus, an information processing system including one or more information processing apparatus, a method performed by a computer, or a program that causes the computer to perform the method. The present invention may further be regarded as a recording medium stored with the program, readable by a computer, a device, a machine, and the like. Here, the recording medium, readable by a computer and the like, is a recording medium that stores information such as data and a program electrically, magnetically, optically, mechanically, or through a chemical action, the information being readable by the computer and the like.

### [Effect of the invention]

With the information processing according to the present invention, accuracy of communication allocation can be improved in a system in which communication is allocated to any of a plurality of servers.

### [Brief description of the drawings]

FIG. 1 is a schematic view showing a hardware configuration of a system according to an embodiment;
FIG. 2 is a schematic view showing a functional configuration of the system according to the embodiment;
FIG. 3 is a schematic view showing a method for selecting a replication target server through Consistent Hashing, employed in the embodiment;
FIG. 4 is a flowchart showing a flow of server allocation processing according to the embodiment;
FIG. 5 is a first flowchart showing the flow of the session information management processing according to the embodiment;
FIG. 6 is a second flowchart showing the flow of the session information management processing according to the embodiment;
FIG. 7 is a third flowchart showing the flow of the session information management processing according to the embodiment;
FIG. 8 is a flowchart illustrating a modification of the flow of the server allocation processing according to the embodiment; and
FIG. 9 is a flowchart showing a variation of the flow of the session information management processing according to the embodiment.

### [Mode for carrying out the invention]

An embodiment of the present invention is described below with reference to the drawings. The embodiment described below is merely an example, and the present invention is not limited to specific configurations described below. The present invention may be implemented as appropriate using specific configurations for respective embodiments.

### <System configuration>

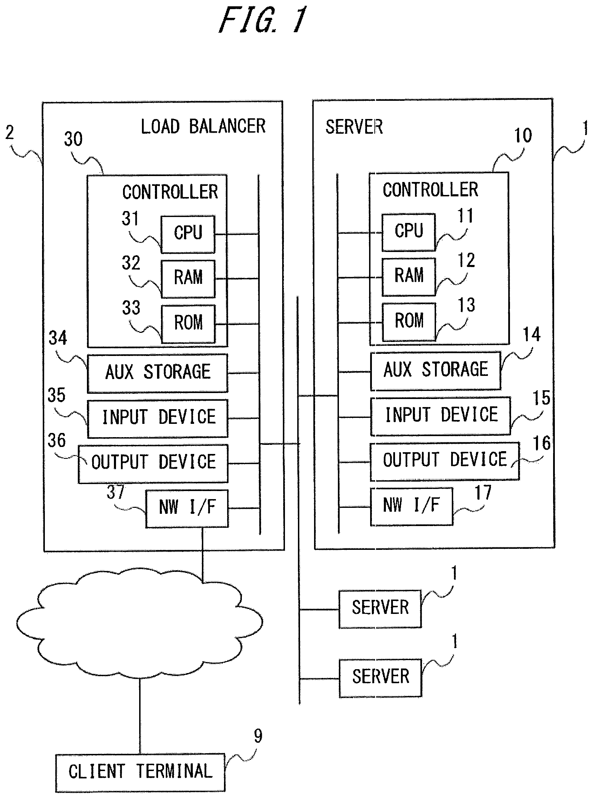

FIG. 1 is a schematic view showing a hardware configuration of a system according to the present embodiment. The system according to the present embodiment includes a plurality of servers 1 and a load balancer (load balancing apparatus) 2 that are communicably connected to each other through a network such as the Internet. A client terminal 9 is connected to the system according to the present embodiment through a network. The servers 1 and the load balancer 2 may each be formed of a single casing or may be formed of a plurality of casings connected to each other through the network and the like.

The servers 1 are information processing apparatuses each including: a controller 10 including a central processing unit (CPU) 11, a random access memory (RAM) 12, and a read only memory (ROM) 13; a non-volatile auxiliary storage 14; an input device 15; an output device 16; and a network interface 17. It is to be noted that the configuration of the information processing apparatus according to an embodiment of the present invention needs not to be the same as the configuration described above. Components in a specific hardware configuration of the information processing apparatus may be omitted, replaced, or added as appropriate, in accordance with an embodiment.

The load balancer 2 is also an information processing apparatus including: a controller 30 including a CPU 31, a RAM 32, and a ROM 33; an auxiliary storage device 34; an input device 35; an output device 36; and a network interface 37, as is the case of the server 1. Although not elaborated in the figure, the client terminal 9 is also an information processing apparatus including: a controller including the CPU, the RAM, and the ROM; an auxiliary storage device; an input device; an output device; and a network interface, as is the case of the server 1.

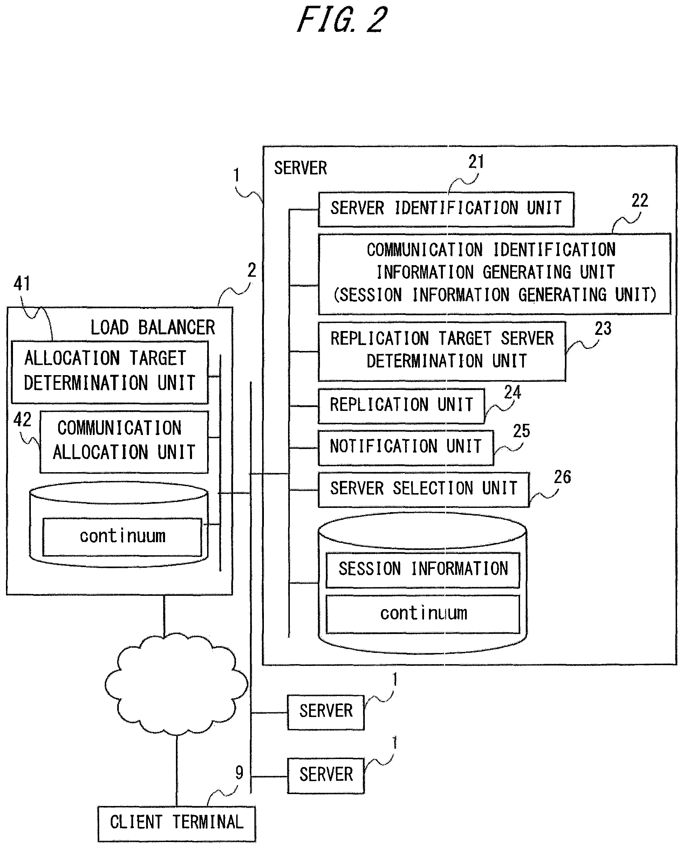

FIG. 2 is a schematic view showing a functional configuration of the system according to the present embodiment. In the server 1 according to the present embodiment, the CPU 11 interprets and executes various programs loaded onto the RAM 12 and controls various types of hardware of the server 1. Thus, the server 1 functions as an information processing apparatus including a communication identification information generation unit (session information generation unit) 22, a replication target determination unit 23, a replication unit 24, and a server selection unit 26. The functions, all of which are exemplarily described as being implemented by the general purpose CPU 11 in the present embodiment, may at least partially be implemented by at least one dedicated processor.

In the present embodiment, the servers 1 are each a server that functions to manage a website and transmit an HTML content in response to a content acquisition request made with HTTP. The server 1 distributes the content in the website in response to a request from the client terminal 9. In the present embodiment, a web service is described as an example of a service provided by the server 1. However, in implementing the present invention, the server 1 is not limited to a server that provides the web service. The present invention may be applied to a group of servers for providing other services as well.

In the load balancer 2 according to the present embodiment, the CPU 31 interprets and executes various programs loaded onto the RAM 32 and controls various types of hardware of the load balancer 2. Thus, the load balancer 2 functions as an information processing apparatus including an allocation target determination unit 41, a communication allocation unit 42, a communication identifier generation unit (session ID generation unit) 43, and a notification unit 44. The functions, all of which are exemplarily described as being implemented by the general purpose CPU 31 in the present embodiment, may at least partially be implemented by at least one dedicated processor.

In the present embodiment, communication from the client terminal 9 to the website is first received by the load balancer 2. This load balancer 2, which serves as a load balancing apparatus allocates, upon receiving the communication from the client terminal 9, the communication to one of the servers 1 thereby distributing the load, imposed on the website, among the servers 1. The load balancer 2 used in the present embodiment determines the server 1 as a load distribution target to which the communication from the client terminal 9 is allocated, based on a certain load balancing algorithm. Basically, the load balancer 2 performs the allocation of communication from one client terminal 9 to one server 1 in order to maintain a session between the client terminal 9 and the server 1. However, due to a certain situation on a side of the server 1 or the load balancer 2, the communication from the one client terminal 9 may be allocated to a server 1 that is different from the one server 1. For example, as the situation on the side of the server 1, the server 1 might be down. As the situation on the side of the load balancer 2, the load balancer 2 might change the server 1 as the allocation target in an attempt to increase a processing speed or there might be a problem in the performance of the load balancer 2.

The load balancer 2 or the server 1, allocated with the communication from the client terminal 9 by the load balancer 2, issues a session ID to the client terminal 9. With the session ID, at least the client terminal 9 or a user can be uniquely identified. After this process, the server 1 identifies communications between the client terminal 9 and the server 1 by using the session ID, and manages the communications between the client terminal 9 and the server 1 by using session information identified by the session ID. Thus, after the issuance of the session ID, a packet transmitted between the server 1 and the client terminal 9 includes the session ID. The session ID is an identifier with which communication with the client terminal 9 or the user is identified and a service is provided to each client terminal 9 or user. The session ID corresponds to a "communication identifier" of the present invention.

The client terminal 9 has a function of transmitting a packet to a website designated with a uniform resource locator (URL) and a function of receiving a content transmitted as a reply from the server 1 allocated with the packet by the load balancer 2. The client terminal 9 also stores a session ID received from a webserver and used for managing communications with the connected server 1.

In the present embodiment, the session information, including the session ID issued by any of the servers 1, is replicated to at least one server 1. The server 1 determined as a target of replication of the session information is referred to as "replication target server". The server 1 as the session information replication target is determined by using an algorithm common to all the servers 1. The algorithm employed as the common algorithm may be any algorithm having reproducibility in the server 1 and being selected in accordance with an input (the session ID in the present embodiment). Because the server 1 is determined to be the replication target server by using such an algorithm, the algorithm can be used for selecting the replication target server after the replication target server is determined by using the session ID. In the present invention, a method for determining the replication target server with Consistent Hashing is employed as a method for determining the replication target server by using such an algorithm.

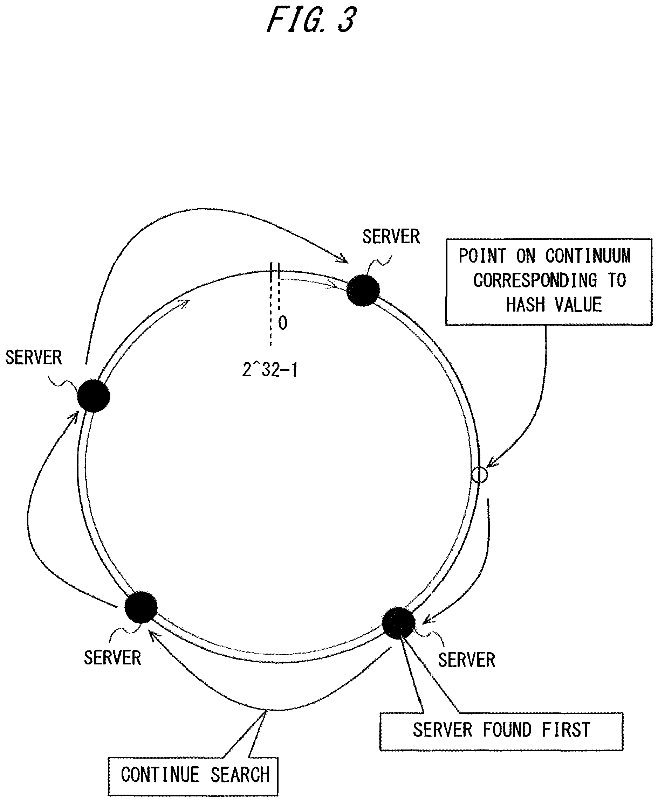

FIG. 3 is a schematic view showing a method for determining the replication target server with Consistent Hashing, employed in the present embodiment. In Consistent Hashing, a continuum is used in which integers from 0 to a predetermined number n (for example, 2^32-1) are sequentially defined at equal intervals in a single direction (clockwise in the figure) on a circumference. Thus, the number on the continuum is incremented by 1 from 0 to n, at the final point on the continuum, in the single direction (clockwise) along the circumference, and then returns to 0. The servers 1 used for websites in the present embodiment are each allocated with any one of the integers from 0 to n as the server identifier. In other words, the servers 1 used in the system are mapped on the continuum.

The load balancer 2 or the server 1 uses a hashing operation algorithm, common to the load balancer 2 and all the servers 1, and obtains a hash value unique to each session ID for determining and selecting the server 1 as the session information replication target server. Thus, mapping information on a continuum server (hereinafter, also simply referred to as "continuum") is synchronized between the load balancer 2 and the server 1. The hash value may be obtained by performing a hashing operation with a part or all of the session IDs as input values. When a hash value within the range from 0 to n is used as the session ID, the session ID may be directly used as the hash value for determining a point on the continuum.

First of all, the replication target determination unit 23 or the server selection unit 26 initiates search in the single direction (clockwise in the figure) in use of a point on the continuum corresponding to the obtained hash value as the starting point. The first server 1 to be found is determined as the session information replication target (or selected as an acquisition target). The search is terminated when a single server 1 is set to be the replication target, or when the session information is acquired from the selected server 1. The search in the single direction (clockwise in the figure) on the continuum continues when two or more servers 1 are set be the replication target, or when the session information is not acquired from the selected server 1. The server 1 found next is again determined as the target of replication of the session information (or selected as the acquisition target). When the value of the searched position exceeds the limit value n (2^32-1 for example) while the search is still in process, the searched position returns to the starting point (that is, 0) and the search continues.

### <Flow of processing>

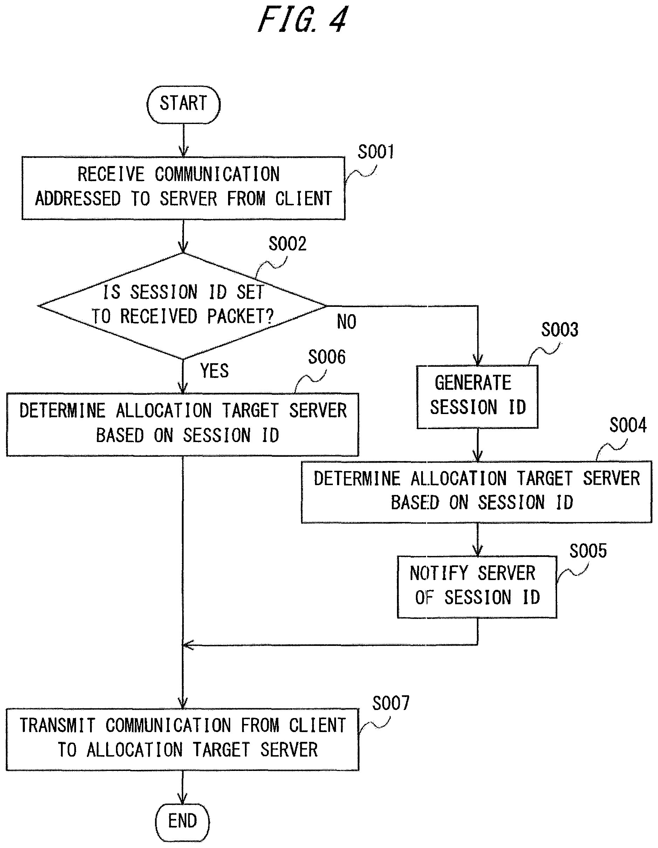

Processing in the present embodiment is described in detail with reference to FIGS. 4 to 7. The detail and the order of steps in the processing described in the present embodiment are merely an example, and thus can be selectively employed as appropriate in accordance with an embodiment.

FIG. 4 is a flowchart showing a flow of server allocation processing according to the present embodiment. The processing shown in the flowchart is triggered by the reception of a packet, transmitted from the client terminal 9, by the load balancer 2.

In step S001 and step S002, the communication from the client terminal 9 is received, and whether a session ID is set is determined. The packet transmitted from the client terminal 9 is first received by the load balancer 2 and then is received by the server 1 (step S001). Upon receiving the packet transmitted from the client terminal 9, the load balancer 2 refers to the received packet and thus determines whether the session ID is set to the received packet (step S002). The processing proceeds to step S004 when the load balancer 2 determines that the session ID is set to the received packet, and proceeds to step S003 when the load balancer 2 determines that the session ID is not set to the received packet.

In step S003, the session ID is generated. When the session ID is not set to the packet received from the client terminal 9, the communication identifier generation unit 43 of het load balancer 2 generates the session ID as an identifier for identifying communications between the client terminal 9 as the transmission source of the packet and the server 1. The processing then proceeds to step S004.

In step S004, an allocation target server is determined based on the session ID. The allocation target determination unit 41 of the load balancer 2 determines a server (allocation target server) to which the packet is allocated from among a plurality of servers mapped on the continuum, by using the Consistent Hashing described above. More specifically, the allocation target determination unit 41 performs the hashing operation with a part or all of the session IDs, generated in step S003, as an input value to obtain a hash value. The employed hashing operation has reproducibility with respect to an input. The allocation target determination unit 41 performs the search in use of a point corresponding to the hash value thus obtained as the starting point on the continuum, and determines the first server 1 to be found as the allocation target server. The processing then proceeds to step S005.

In step S005, the server is notified of the session ID. The notification unit 44 of the load balancer 2 notifies at least the allocation target server determined in step S004 of the session ID generated in step S003. The notification unit 44 may notify the server 1 that is not the allocation target server of the session ID. For example, the load balancer 2 may search the continuum by using the Consistent Hashing to sequentially select a predetermined number of servers 1, and the notification unit 44 may notify to the predetermined number of servers 1 thus selected of the session ID. The processing then proceeds to step S007.

In step S006, the allocation target server is determined based on the session ID. When the session ID has been set to the packet received from the client terminal 9, the allocation target determination unit 41 of the load balancer 2 determines the allocation target server, to which the packet is allocated, from among a plurality of servers mapped on the continuum. The specific determination method is substantially the same as the determination method described in step S004, except that the session ID used for the calculation is extracted from the received packet. The processing then proceeds to step S007.

In step S007, the communication from the client terminal 9 is received by the allocation target server. The communication allocation unit 42 of the load balancer 2 transfers the packet received in step S001, to the allocation target serer determined in step S003 or step S006. Thus, the packet reaches any one of the plurality of servers 1, and the server1, allocated with the communication by the load balancer 2, receives the packet transmitted from the client terminal 9. The processing shown in this flowchart is then terminated.

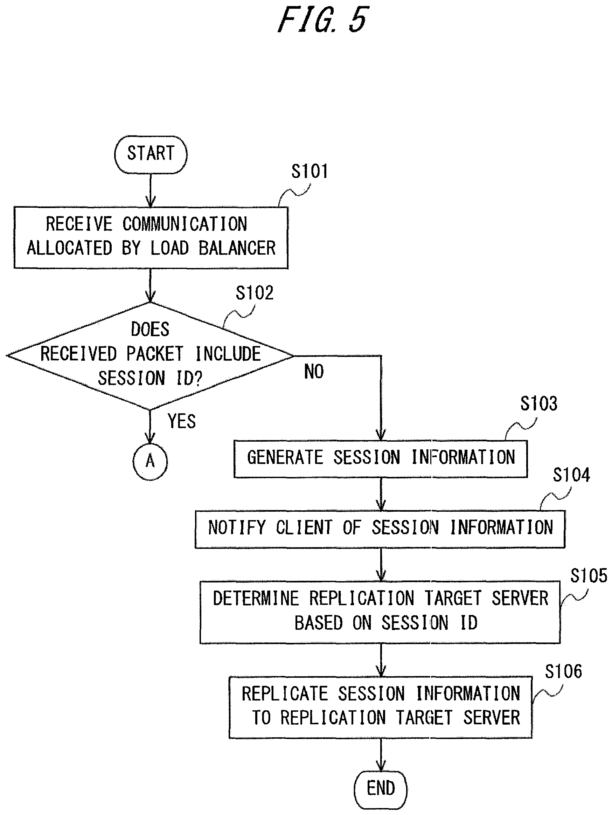

FIGS. 5 to 7 are each a flowchart showing a flow of session information management processing according to the present embodiment. The processing shown in the flowcharts is triggered by the reception of a packet, transmitted from the client terminal 9, by the server 1 to which the communication has been allocated by the load balancer 2.

In step S101, communication from the client terminal 9 is received. The server 1 allocated with the communication by the load balancer 2 receives the packet transmitted from the client terminal 9. The server 1 that has received the packet is hereinafter referred to as "received server". The processing then proceeds to step S102.

In step S102, whether the session ID is set to the received packet is determined. Specifically, the received server refers to the packet received in step S101 to determine whether the packet includes the session ID for identifying communications between the server 1 and the client terminal 9. The processing proceeds to step S110, when the packet includes the session ID, that is, when the session ID, generated by the load balancer 2 (see step S003), has been issued to the client terminal 9. The processing proceeds to step S103, when the packet includes no session ID, that is, when the session ID, generated by the load balancer 2, has not been issued to the client terminal 9.

Processing from step S103 to step 106, performed when the session ID, generated by the load balancer 2, has not been issued the client terminal 9, is processing in which a session ID is issued, and session information related to the session ID is replicated to another server 1.

In steps S103 and S104, the session information is generated and notified. The communication identification information generation unit 22 of the received server generates the session information (step S103). The session information is information for identifying communications between the client terminal 9 as the transmission source of the packet and the server 1. The received server associates the session information thus generated with the session ID notified from the load balancer 2 in step S005 described above, and notifies the client terminal 9, as the transmission source of the packet, of the session information including the associated session ID (step S104). The processing then proceeds to step S105.

In step S105, the replication target server is determined based on the session ID. The replication target determination unit 23 of the received server determines the replication target server by using Consistent Hashing described above. Thus, in the present embodiment, the algorithm used for determining the replication target server is the same as the algorithm used by the load balancer 2 for determining the allocation target server. Furthermore, the referred continuum is synchronized between the server 1 and the load balancer 2. More specifically, the received server performs the hashing operation with a part or all of the session IDs as an input value to obtain a hash value. The employed hashing operation has reproducibility with respect to an input. The server 1 performs the search in use of a point corresponding to the hash value thus obtained as the starting point on the continuum, and determines a predetermined number of servers 1 as the replication target servers in order these servers have been found. The processing then proceeds to step S106.

In step S106, the session information is replicated to the replication target server. The replication unit 24 of the received server transmits the session information, generated in step S103, to the replication target server determined in step S105, so that the session information is replicated to and stored in the replication target server. The processing shown in this flowchart is then terminated.

When a plurality of replication target servers are determined so that the session information is replicated to the replication target servers, only a part (for example, one) of the replication target servers may store the session information in the non-volatile auxiliary storage 14. When only the part of the replication target servers stores the session information in the non-volatile auxiliary storage 14, the remaining part of the replication target servers stores the session information in the RAM 12. Thus, an area used for the session information replication in the auxiliary storage 14 can be saved.

In step S110, whether the session information is stored in the received server is determined. When the session ID is set to the received packet, the received server determines whether the session information, corresponding to the session ID set to the received packet, is stored in the received server. When the received server determines that the session information is stored in the received server, the received server manages the content of the communications with the client terminal 9 by using the session information. Then processing proceeds to step S117. The processing proceeds to step S111 when the session information is not stored in the received server.

In the system according to the present embodiment, the load balancer 2 determines the allocation target by using Consistent Hashing, whereby the determination in step S110 indicates that "server has session information is stored" in a normal state. However, when the load balancer 2 loses the information on the continuum for example, the determination in step S110 might indicate that "session information is not stored". In the system according to the present embodiment, the session information can be received through the processing in step S111 to step S115 even when the received server does not store the session information, so that the continuum needs not to be precisely synchronized, where by the load required for synchronizing the continuum can be reduced. More specifically, the load balancer 2 can allocate communications even during the process of synchronizing the continuum, that is, without waiting for the synchronization to be completed.

Processing from step S111 to step S115 is processing for acquiring the session information from another server 1, when the session ID is set to the received packet (step S102: YES), but the session information is not stored in the received server (step S110: NO). In the system according to the present embodiment, even when the server 1 without the session ID is allocated with the communication by the load balancer 2, the server 1 allocated with the communication can select the replication target server based on the session ID to acquire the session information through the processing from step S111 to step S115.

In step S111, the server 1 is selected based on the session ID. The server selection unit 26 of the received server selects the server 1 through Consistent Hashing described above. More specifically, the received server performs the hashing operation with the session ID as an input value to obtain a hash value. The server 1 performs a search in use of a point corresponding to the hash value thus obtained as the starting point on the continuum, and selects the first server 1 found. The algorithm used for the selection in step S111 is the same as the one used for determining the replication target server in step S105 (Consistent Hashing using the same continuum in the present embodiment). Thus, the replication target server determined in step S105 to which the session information has been replicated is selected with a higher priority in step S111. The processing then proceeds to step S112.

In step S112, an attempt to acquire the session information from the selected server 1 is made. Specifically, the received server requests the session information corresponding to the session ID set to the received packet from the server 1 selected in step S111. When the requested server 1 has the session information, the session information is successfully acquired. However, the session information might fail to be acquired due to a certain circumstance including a case where the requested server 1 is not the replication target server or a case where the requested server 1 is under failure.

In step S113 to step S115, the selection of the server 1 based on the session ID and the request for the session information are repeated until the session information is acquired. Thus, the received server determines whether the session information has been successfully acquired in step S112 (step S113). Upon determining that the session information has been successfully acquired, the received server manages the content of the communications performed with the client terminal 9 by using the acquired session information. The processing then proceeds to step S116.

When the received server determines that the acquisition of the session information has failed, the server selection unit 26 of the received server selects the next server 1 based on the session ID (step S115), and requests from the selected server 1 the session information (step S112). Here, the "next server" to be selected is the next server 1 found after the server 1, found in the processing in immediately preceding step S112, by continuing the search with Consistent Hashing described with reference to FIG. 3. The selection of the next server 1 and the request for the session information are repeated until the session information is acquired (step S113: YES). In the present embodiment, as the explanation of steps S103 to S106 indicated, the replication target servers are selected by a predetermined number (one or more servers), but there is a limitation to the number of servers. Thus, when the session information cannot be acquired even when the whole circumference of the continuum has been searched and thus the request has been made to all the servers 1 (step S114: YES), the acquisition of the session information fails, and the processing in this flowchart is terminated.

In step S113 to S115, the selection of the server 1 based on the session ID and the request for the session information are repeated until these session information is acquired, regardless of whether the server 1 selected each time is the replication target server. This processing is nothing more than auxiliary processing for increasing the reliability of the session information replication processing using Consistent Hashing, and thus can be omitted.

In step S116, the continuum is synchronized. When the determination in step S110 indicates that the received server does not store the session information, the determination implies that the load balancer 2 has failed in communication allocation to the server storing the session information, because the load balancer 2 has lost the information on the continuum, the information on the continuum is not the latest information, or the like. Thus, when the determination in step S110 indicates that the received server does not store the session information, the load balancer 2 and the server 1 execute processing of synchronizing the continuum. The synchronization processing is executed when the communication allocation fails, and thus normal synchronization does not have to be implemented to the continuum precisely, whereby the load required for synchronizing the continuum can be reduced. The processing then proceeds to step 117 where the session information is updated.

In step S117 to step S122, the session information stored in the replication target server is updated.

In step S117, whether the session information needs to be updated is determined. Specifically, the received server determines whether the session information used between the received server and the client terminal 9 needs to be updated in accordance with the communications with the client terminal 9. The session information is updated when the content to be managed in the communications is changed, added, and deleted in the course of the communications between the client terminal 9 and the received server. When the received server determines that the session information needs not to be updated, the processing shown in this flowchart is terminated. When the received server determines that the session information needs to be updated, the processing proceeds to step S118.

In steps S118 and step S119, the session information is updated, and the client terminal 9 is notified of the updated session information. The received server updates the session information (step S118) and transmits the response packet including the updated session information to the client terminal 9, whereby the client terminal 9 is notified of the updated session information (step S119). The updating and notification of the session information is processing that has conventionally been performed in the server/client communications, and thus will not be described in detail. The processing then proceeds to step S120.

In step S120 and step S121, the session information of the replication target server is updated. The server selection unit 26 of the received server selects the replication target server based on the session ID (step S120), and updates the session information stored in the replication target server (step S121). The processing in step S120 is substantially the same as the processing in step S111 described above, and thus the explanation thereof will be omitted. In step S121, the received server transmits the session information updated in step S118 to the replication target server selected in step S120. Thus, the session information stored in the replication target server is updated (step S121). The processing shown in this flowchart is then terminated.

In the system according to the present embodiment, when communication is allocated to any one of the plurality of servers 1, the session information is not replicated to all the servers 1. Instead, the communication can be accurately allocated to the server 1 storing the session information. Thus, the system according to the present embodiment can implement accurate load balancing with a smaller processing load compared with a system where the session information is replicated to all the servers 1 or centralized management is performed for the replication target servers. When Consistent Hashing is employed for determining the allocation target server and the replication target server, a stable operation can be maintained even when a server is added to or deleted from the system.

### <Variation>

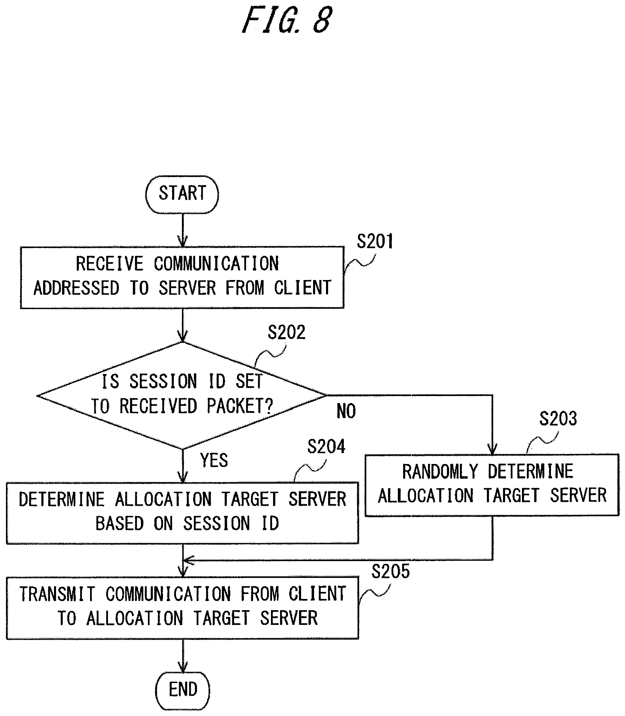

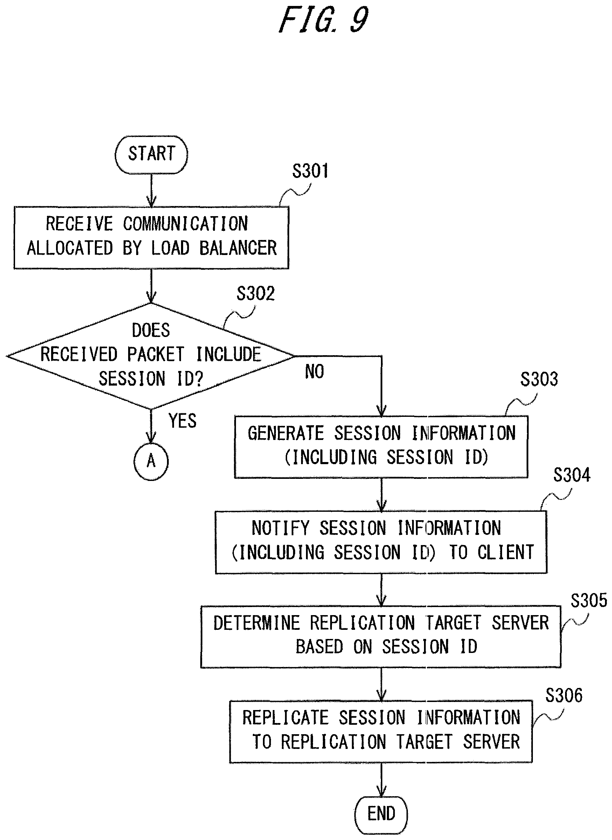

In the embodiment described above, the load balancer 2 generates a session ID when no session ID is set to a packet transmitted from a client and received by the load balancer 2. Alternatively, when the session with no session ID set occurs, the load balancer 2 may not generate the session ID, and the server may generate the session ID. In this case, the processing described above with reference to FIG. 4 to FIG. 7 is partially modified. Here, flows of processing executed in a case where the server 1 generates the session ID is described with reference to FIG.8 and FIG. 9.

FIG. 8 is a flowchart showing a variation of a flow of the server allocation processing according to the present embodiment. The processing shown in the flowchart is triggered by the reception of the packet, transmitted from the client terminal 9, by the load balancer 2.

In step S201 and step S202, the communication from the client terminal 9 is received, and whether a session ID is set is determined. The processing in the steps is substantially the same as the processing in step S001 and step S002 described above with reference to FIG. 4, and thus the explanation thereof will be omitted. The processing proceeds to step S204 when the determination indicates that the session ID is set to the session ID, and proceeds to step S203 when the determination indicates that the session ID is not set to the session ID.

In step S203, the allocation target server is randomly determined. When the session ID is not set to the packet received from the client terminal 9, the allocation target determination unit 41 of the load balancer 2 randomly determines the server (allocation target sever) to which the packet is allocated, from among a plurality of servers mapped on the continuum. Alternatively, the allocation target server may be determined not randomly. For example, information related to a current load on each of the plurality of servers may be acquired, and the allocation target server may be determined in such a manner that a server with a smaller load is set to be the allocation target server with a higher priority. Furthermore, the allocation target sever may be determined by another load balancing algorithm. The processing then proceeds to step S205.

In step S204, the allocation target sever is determined based on the session ID. When the session ID has been set to the packet received from the client terminal 9, the allocation target determination unit 41 of the load balancer 2 determines the allocation target sever to which the packet is allocated from among the plurality of servers mapped on the continuum. This processing is substantially the same as the processing in step S006 described above with reference to FIG. 4, and thus the explanation thereof is omitted. The processing then proceeds to step S205.

In step S205, communication from the client terminal 9 is transmitted to the allocation target server. The communication allocation unit 42 of the load balancer 2 transfers the packet, received in step S201, to the allocation target server determined in step S203 or step S204. Thus, the packet reaches any one of the plurality of servers 1, and the server 1, allocated with the communication by the load balancer 2, receives the packet transferred from the client terminal 9. The processing shown in this flowchart is then terminated.

When the packet without the session ID is allocated to the server 1 in the variation of the server allocation processing described with reference to FIG. 8, the allocated server needs to generate the session ID and perform notification to the client terminal. A flow of the processing executed by the server 1 in such a case is described with reference to FIG. 9.

FIG. 9 is a flowchart showing a variation of the session information management processing according to the present embodiment. The processing shown in the flowchart is started when the server 1 allocated by the load balancer 2 receives the packet transmitted from the client terminal 9.

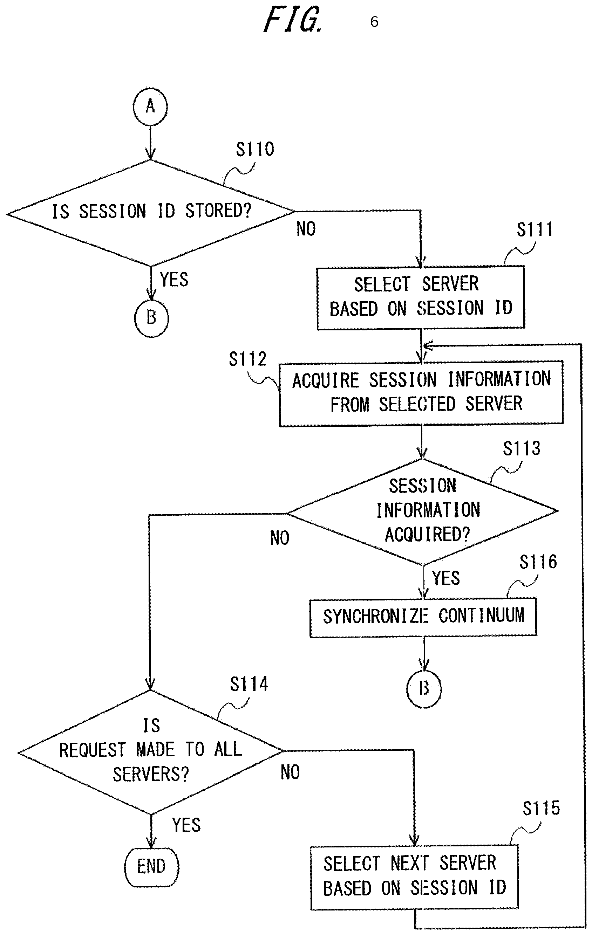

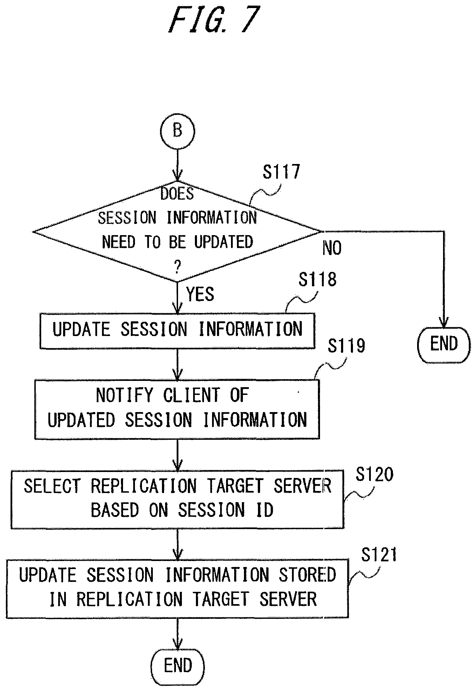

In step S301 and step S302, the communication from the client terminal 9 is received, and whether the session ID is set to the received packet is determined. This processing is substantially the same as the processing in step S101 and step S102 shown in FIG. 5, and thus the explanation thereof will be omitted. When the session ID is set to the packet, the processing proceeds to the processing of acquiring and updating the session information described with reference to FIG. 6 and FIG. 7. The processing of acquiring and updating the session information is the same as the processing described with reference to FIG. 6 and FIG. 7, and thus the explanation thereof is omitted. When the session ID is not set, the processing proceeds to step S303.

In step S303 and step S304, the session information including the session ID is generated and notified. The communication identification information generation unit 22 of the received server generates the session information including the session ID as information for identifying communications between the client terminal 9, as the packet transmission source, and the server 1 (step S303). The received server associates the session information thus generated with the session ID, and notifies the client terminal 9, as the transmission source of the packet, of the session information together with the session ID (step S304). The processing then proceeds to step S305.

In step S305 and step S306, the replication target server is determined based on the session ID, and the session information is replicated to the replication target server. The processing in the steps are substantially the same as the processing in step S105 and step S106 described above with reference to FIG. 5, and thus the explanation thereof will be omitted. The processing shown in this flowchart is then terminated.

## Claims

1. An information processing system including a plurality of servers (1) and a load balancing apparatus (2),
each of the plurality of servers (1)comprising:
a replication target determination unit (23) that determines an allocation target server as a replication target for communication identifier information in order to identify communication between a client (9) and a server (1) from among the plurality of servers (1), by using a predetermined algorithm having reproducibility with respect to an input; and
a replication unit (24) that replicates the communication identification information to the replication target server determined by the replication target determination unit (23), and
the load balancing apparatus (2) comprising:
an allocation target determination unit (41) that determines an allocation target server to which the communication is allocated from among the plurality of servers (1), by using the predetermined algorithm; and
a communication allocation unit (42) that allocates the communication to the allocation target server determined by the allocation target determination unit (41),
wherein the replication target determination unit (23) determines a replication target server for the communication identification information by processing at least part of the communication identification information on the basis of the predetermined algorithm, and
the allocation target determination unit (41) determines the allocation target server to which the communication corresponding to the communication identification information is allocated, by processing at least part of the communication identification information, on the basis of the predetermined algorithm.

2. The information processing system according to claim 1, further comprising:
an identifier generation unit (43) that generates an identifier for identifying the communication; and
a notification unit (44) that notifies the allocation target server determined by the allocation target determination unit (41) of the identifier generated by the identifier generation unit (22), so that the identifier is included in the communication identification information, wherein
the allocation target determination unit (41) determines the allocation target server, by processing the identifier on the basis of the predetermined algorithm.

3. The information processing system according to claim 1 or 2, wherein
the predetermined algorithm is an algorithm for selecting one or a plurality of servers (1) from among the plurality of servers (1) in an order of reproducibility with respect to an input, and
the replication target determination unit (23) determines as the replication target server, a predetermined number of servers from a server ranked top in the order from among the servers selected by using the predetermined algorithm, and
the allocation target determination unit (41) determines the allocation target server in accordance with the order.

4. A method in an information processing system including a plurality of servers (1) and a load balancing apparatus (2),
the method causing each of the plurality of servers (1) to execute:
a replication target determination step of determining a replication target server as a replication target for communication identification information for identifying communication between a client (9) and a server (1) from among the plurality of servers (1), by using a predetermined algorithm having reproducibility with respect to an input; and
a replication step of replicating the communication identification information to the replication target server determined in the replication target determination step, and
the method causing the load balancing apparatus (2) to execute:
an allocation target determination step of determining an allocation target server as an allocation target of the communication from among the plurality of servers (1) by using the predetermined algorithm; and
a communication allocation step of allocating the communication to the allocation target server determined in the allocation target determination step
wherein the replication target determination step involves determining a replication target server for the communication identification information by processing at least part of the communication identification information on the basis of the predetermined algorithm, and
the allocation target determination step involves determining the allocation target server to which the communication corresponding to the communication identification information is allocated, by processing at least part of the communication identification information, on the basis of the predetermined algorithm.

5. A program adapted to perform the method steps of claim 4.

## Patentansprüche

1. Ein Informationsverarbeitungssystem, das eine Vielzahl von Servern (1) und eine Lastverteilungsvorrichtung (2) aufweist,
wobei jeder der Vielzahl von Servern (1) aufweist:
eine Replikationszielbestimmungseinheit (23), die einen Allokationszielserver als ein Replikationsziel für Kommunikationsidentifizierungsinformation zum Identifizieren einer Kommunikation zwischen einem Client (9) und einem Sever (1) unter der Vielzahl von Servern (1) unter Verwendung eines vorbestimmten Algorithmus bestimmt, der eine Reproduzierbarkeit bezüglich einer Eingabe aufweist, und
eine Replikationseinheit (24), die die Kommunikationsidentifizierungsinformation zu dem Replikationszielserver repliziert, der durch die Replikationszielbestimmungseinheit (23) bestimmt wird, und
wobei die Lastverteilungsvorrichtung (2) aufweist:
eine Allokationszielbestimmungseinheit (41), die einen Allokationszielserver, dem die Kommunikation zugewiesen wird, unter der Vielzahl von Servern (1) unter Verwendung des vorbestimmten Algorithmus bestimmt und
eine Kommunikationsallokationseinheit (42), die die Kommunikation dem Allokationszielserver zuweist, der durch die Allokationszielbestimmungseinheit (41) bestimmt wird,
wobei die Replikationszielbestimmungseinheit (23) einen Replikationszielserver für die Kommunikationsidentifizierungsinformation durch Verarbeiten zumindest eines Teils der Kommunikationsidentifizierungsinformation auf der Basis des vorbestimmten Algorithmus bestimmt und
die Allokationszielbestimmungseinheit (41) den Allokationszielserver, dem die Kommunikation, die zu der Kommunikationsidentifizierungsinformation gehört, zugewiesen wird, durch Verarbeiten zumindest eines Teils der Kommunikationsidentifizierungsinformation auf der Basis des vorbestimmten Algorithmus bestimmt.

2. Das Informationsverarbeitungssystem nach Anspruch 1, weiter aufweisend:
eine Identifizierungserzeugungseinheit (43), die eine Identifizierung zum Identifizieren der Kommunikation erzeugt, und
eine Anzeigeeinheit (44), die dem Allokationszielserver, der durch die Allokationszielbestimmungseinheit (41) bestimmt wird, die Identifizierung anzeigt, die durch die Identifizierungserzeugungseinheit (22) erzeugt wird, so dass die Identifizierung in die Kommunikationsidentifizierungsinformation eingeschlossen wird, wobei
die Allokationszielbestimmungseinheit (41) den Allokationszielserver durch Verarbeiten der Identifizierung auf der Basis des vorbestimmten Algorithmus bestimmt.

3. Das Informationsverarbeitungssystem nach Anspruch 1 oder 2, wobei
der vorbestimmte Algorithmus ein Algorithmus zum Auswählen eines oder einer Vielzahl von Servern (1) unter der Vielzahl von Servern (1) in einer Ordnung einer Reproduzierbarkeit bezüglich einer Eingabe ist und
die Replikationszielbestimmungseinheit (23) als den Replikationszielserver eine vorbestimmte Anzahl von Servern aus einem Server bestimmt, der in der Ordnung unter den Servern oben rangiert, die unter Verwendung des vorbestimmten Algorithmus ausgewählt werden, und
die Allokationszielbestimmungseinheit (41) den Allokationszielserver gemäß der Ordnung bestimmt.

4. Ein Verfahren in einem Informationsverarbeitungssystem, das eine Vielzahl von Servern (1) und eine Lastverteilungsvorrichtung (2) aufweist,
wobei das Verfahren jeden der Vielzahl von Servern (1) zur Ausführung veranlasst:
eines Replikationszielbestimmungsschritts des Bestimmens eines Replikationszielservers als ein Replikationsziel für eine Kommunikationsidentifizierungsinformation zum Identifizieren einer Kommunikation zwischen einem Client (9) und einem Server (1) unter der Vielzahl von Servern (1) unter Verwendung eines vorbestimmten Algorithmus mit einer Reproduzierbarkeit bezüglich einer Eingabe und
eines Replikationsschritts des Replizierens der Kommunikationsidentifizierungsinformation zu dem Replikationszielserver, der in dem Replikationszielbestimmungsschritt bestimmt wird, und
wobei das Verfahren die Lastverteilungsvorrichtung (2) zur Durchführung veranlasst:
eines Allokationszielbestimmungsschritts des Bestimmens eines Allokationszielservers als ein Allokationsziel der Kommunikation unter der Vielzahl von Servern (1) unter Verwendung des vorbestimmten Algorithmus und
eines Kommunikationsallokationsschritts des Zuweisens der Kommunikation zu dem Allokationszielserver, der in dem Allokationszielbestimmungsschritt bestimmt wird,
wobei der Replikationszielbestimmungsschritt das Bestimmen eines Replikationszielservers für die Kommunikationsidentifizierungsinformation durch Verarbeiten zumindest eines Teil der Kommunikationsidentifizierungsinformation auf der Basis des vorbestimmten Algorithmus umfasst und
der Allokationszielbestimmungsschritt das Bestimmen des Allokationszielservers, dem die Kommunikation, die zu der Kommunikationsidentifizierungsinformation gehört, zugewiesen wird, durch Verarbeiten zumindest eines Teils der Kommunikationsidentifizierungsinformation auf der Basis des vorbestimmten Algorithmus umfasst.

5. Ein Programm, das zum Durchführen der Verfahrensschritte nach Anspruch 4 angepasst ist.

## Revendications

1. Système de traitement d'informations comprenant un ensemble de serveurs (1) et un appareil d'équilibrage de charge (2),
chacun des serveurs (1) de l'ensemble de serveurs comprenant :
une unité de détermination de cible de reproduction (23) qui fixe un serveur cible d'attribution en tant que cible de reproduction de l'information d'identification d'une communication de façon à identifier une communication entre un client (9) et un serveur (1) parmi l'ensemble de serveurs (1) en utilisant un algorithme prédéfini ayant une reproductibilité par rapport à une entrée, et
une unité de reproduction (24) qui reproduit l'information d'identification de la communication pour le serveur cible de reproduction déterminé par l'unité de détermination de cible de reproduction (23), et
l'appareil d'équilibrage de charge (2) comprenant :
une unité de détermination de cible d'attribution (41) qui fixe un serveur cible d'attribution auquel la communication est attribuée parmi l'ensemble de serveurs (1) en utilisant l'algorithme prédéfini, et
une unité d'attribution de communication (42) qui attribue la communication au serveur cible d'attribution déterminé par l'unité de détermination de cible d'attribution (41),
l'unité de détermination de cible de reproduction (23) fixant un serveur cible de reproduction de l'information d'identification de la communication en traitant au moins une partie de l'information d'identification de la communication sur le fondement de l'algorithme prédéfini, et
l'unité de détermination de la cible d'attribution (41) fixant le serveur cible d'attribution auquel est attribuée la communication correspondant à l'information d'identification de la communication en traitant au moins une partie de l'information d'identification de la communication sur le fondement de l'algorithme prédéfini.

2. Système de traitement d'informations conforme à la revendication 1, comprenant en outre :
une unité de création d'identifiant (43) qui crée un identifiant permettant d'identifier la communication, et
une unité de notification (44) qui notifie au serveur cible d'attribution déterminé par l'unité de détermination de la cible d'attribution (41) l'identifiant créé par l'unité de création d'identifiant (22) de sorte que l'identifiant soit contenu dans l'information d'identification de la communication,
l'unité de détermination de cible de distribution fixant le serveur cible d'attribution (41) en traitant l'identifiant sur le fondement de l'algorithme prédéfini.

3. Système de traitement d'informations conforme à la revendication 1 ou 2,
dans lequel l'algorithme prédéfini est un algorithme permettant de sélectionner au moins un serveur (1) parmi l'ensemble de serveurs (1) pour permettre une reproductibilité par rapport à une entrée, et
l'unité de détermination de la cible de reproduction (23) fixant entant que serveur cible de la reproduction un nombre prédéfini de serveurs d'une tête de classement de serveurs parmi les serveurs sélectionnés en utilisant l'algorithme prédéfini, et
l'unité de détermination de la cible d'attribution (41) fixant le serveur cible d'attribution en fonction de l'ordre de ce classement.

4. Procédé mis en oeuvre dans un système de traitement d'informations comprenant un ensemble de serveurs (1) et un appareil d'équilibrage de charge (2),
ce procédé permettant de commander chacun des serveurs (1) de l'ensemble de serveurs (1) de sorte qu'il mette en oeuvre :
une étape de détermination d'une cible de reproduction permettant de fixer un serveur cible de reproduction en tant que cible de reproduction de l'information d'identification de la communication pour permettre d'identifier une communication entre un client (9) et un serveur (1) parmi l'ensemble de serveurs (1) en utilisant un algorithme prédéfini ayant une reproductibilité par rapport à une entrée, et
une étape de reproduction permettant de reproduire l'information d'identification de la communication pour le serveur cible de la reproduction déterminé dans l'étape de détermination de la cible de la reproduction, et
ce procédé commandant l'appareil d'équilibrage de charge (2) pour lui permettre de mettre en oeuvre :
une étape de détermination de cible d'attribution consistant à fixer un serveur cible d'attribution en tant que cible de distribution de la communication parmi l'ensemble de serveurs (1) en utilisant l'algorithme prédéfini, et
une étape d'attribution de la communication consistant à attribuer la communication au serveur cible de l'attribution fixé lors de l'étape de détermination de la cible d'attribution,
l'étape de détermination de la cible de reproduction impliquant la détermination d'un serveur cible de reproduction de l'information d'identification de la communication en traitant au moins une partie de l'information d'identification de la communication sur le fondement de l'algorithme prédéfini, et
l'étape de détermination de la cible d'attribution impliquant la détermination du serveur cible d'attribution auquel la communication correspondant à l'information d'identification de la communication est attribuée en traitant au moins une partie de l'information d'identification de la communication sur le fondement de l'algorithme prédéfini.

5. Programme permettant la mise en oeuvre des étapes du procédé conforme à la revendication 4.
